# EUROPEAN PATENT APPLICATION

(11) **EP 3 163 524 A1**
(43) Date of publication of application: **03.05.2017**
(21) Application number: 16188194.1
(22) Date of filing: 09.09.2016
(51) Int. Cl.: G06Q 10/10

(54) **METHOD AND DEVICE FOR CALLING TAXI**

(30) Priority: 30.10.2015 CN 201510727016
(71) Applicant: Xiaomi Inc., Beijing 100085 (CN)
(72) Inventor: WANG, Xin, Haidian District, Beijing 100085 (CN); YANG, Zhenyu, Haidian District, Beijing 100085 (CN); LIU, Tong, Haidian District, Beijing 100085 (CN)
(74) Representative: Reeve, Nicholas Edward

(57) **Abstract**

The present disclosure relates to a method and a device for calling a taxi. The method includes: determining (S11) whether a user needs to call a taxi based on at least one of conventional behavior data and schedule data; and when it is determined that the user needs to call a taxi, generating (S 12, S24) and outputting a taxi calling order. In the present disclosure, the terminal device can automatically generate and output a taxi calling order when it determines that the user needs to call a taxi. Thereby, it can initiates a taxi calling service as early as possible, avoid delay of schedule for the user. Moreover, the process does not require interference from the user. Thus, it can simplify user operation and save time for the user.

## Description

### TECHNICAL FIELD

The present disclosure generally relates to the field of communication, and more particularly, to a method and a device for calling a taxi.

### BACKGROUND

With popularity of various taxi calling software, in addition to taking a taxi through a regular way, people can also call a taxi for traveling through a taxi calling software. However, existing taxi calling software is not smart enough, in that the whole taxi calling process requires interference of the user and the user operation is complex, which may waste times of the user.

### SUMMARY OF THE INVENTION

In order to solve the problem in the related art, the present disclosure provides a method and a device for calling a taxi.

According to a first aspect of embodiments of the present disclosure, there is provided a method for calling a taxi, which is applied in a subject device, the method includes: determining whether a user needs to call a taxi based on at least one of conventional behaviour data and schedule data; and when it is determined that the user needs to call a taxi, generating and outputting a taxi calling order.

In the method for calling a taxi provided by the present invention, the terminal device can automatically generate and output a taxi calling order when it determines that the user needs to call a taxi. Thereby, it can initiates a taxi calling service as early as possible, avoid delay of schedule for the user. Moreover, the process does not require interference from the user. Thus, it can simplify user operation and save time for the user.

According to an implementation of the first aspect of the present disclosure, determining whether the user needs to call a taxi based on at least one of conventional behaviour data and schedule data, includes: acquiring at least one of conventional behaviour data and schedule data of the user, the conventional behaviour data containing a place and a time where and when the user is present during a certain time period for several times in a set cycle, the schedule data containing a place and a time where and when the user plans to be present; based on at least one of the conventional behaviour data and the schedule data of the user, determining a next place where the user needs to be present according to the conventional behaviour data or the schedule data and a next time when the user arrives at the next place, and determining the next place and the next time as a target place and a target time; and determining whether the user needs to call a taxi based on the target place and the target time.

In the implementation, a next place the user needs to be present is determined according to daily behaviour or schedule of the user. It is determined whether the user needs to call a taxi to get there based on the place the user needs to be present and the arriving time. The whole process can be performed at background and require no user interference.

According to another implementation of the first aspect of the present disclosure, acquiring at least one of conventional behaviour data and schedule data of the user includes: acquiring the conventional behaviour data of the user from a memory of the subject device or a server; and acquiring the schedule data of the user from a schedule, a memorandum and an alarm clock of the subject device, or from the server.

In the implementation, the conventional behaviour data and schedule data of the user can be acquired from the local terminal, or can be acquired over a network. In addition, the schedule data can be specifically acquired from the schedule, a memo and the alarm clock. Thus, the solution can be combined with existing software, to facilitate the operation.

According to another implementation of the first aspect of the present disclosure, determining whether the user needs to call a taxi based on the target place and the target time includes: determining a departure place and a departure time; deciding whether the user can arrive at the target place by public transport means or on foot within a time period from the departure time to the target time; and determining that the user needs to call a taxi if the user cannot arrive at the target place by public transport means or on foot within the time period from the departure time to the target time.

According to another implementation of the first aspect of the present disclosure, determining a departure place and a departure time includes: detecting variation data of a location of the user; determining a state of the user based on the variation data of a location of the user, the state of the user including not setting out and taking a public transport means; when the user is in the state of not setting out, determining a location where the user is currently in as the departure place; and when the user is in the state of taking a public transport means, determining a terminal station of a public transport means as the departure place.

In the implementation, the departure place and the departure time are determined based on variation data of the current location of the user. Thereby, it not only can determine a departure place when the user stays at a place, but also can determine a departure place when the user currently taking a train, a plane or the like.

According to another implementation of the first aspect of the present disclosure, determining a departure place and a departure time further includes: when the user is currently in the state of taking a public transport means, determining a time when a public transport means arrives at the terminal station as the departure time; and when the user is in the state of not setting out, determining a current time as the departure time, or determining a time equals to the current time plus a time period needed by the user to get ready for setting out as the departure time.

In the implementation, the departure time is determined according to different stats (taking a public transport means or not setting out) of the user. Therefore, the determination result is more accurate.

According to another implementation of the first aspect of the present disclosure, deciding whether the user can arrive at the target place by public transport means or on foot within a time period from the departure time to the target time, includes: inquiring an off-line map or an on-line map about a time period which should be took for arriving at the target place by a public transport means or on foot; and if the time period is larger than a difference between the departure time and the target time, deciding that the user cannot arrive at the target place by public transport means or on foot within the time period from the departure time to the target time.

According to another implementation of the first aspect of the present disclosure, a taxi calling order contains the departure place and the target place.

According to another implementation of the first aspect of the present disclosure, a taxi calling order further contains the departure time.

In the implementation, by providing a departure time, the terminal device can determine a time to place an order, to ensure that the user can arrive at the target place on time.

According to another implementation of the first aspect of the present disclosure, the method further includes: generating the conventional behaviour data of the user, the conventional behaviour data of the user containing a set place and a time when the user arrives at the set place.

According to another implementation of the first aspect of the present disclosure, generating the conventional behaviour data of the user includes: recording a place where the user is present during a certain time period for several times in a set cycle, and recording the place as the set place; and recording a time when the user arrives at the set place.

In the above implementation, the conventional behaviour data of the user is generated, to ensure that the terminal device can timely call a taxi for the user according to the conventional behaviour data of the user.

According to another implementation of the first aspect of the present disclosure, generating and outputting a taxi calling order includes: outputting taxi calling options for the user to select therefrom, a taxi calling options containing an order confirmation option, an order modification option and an order cancellation option.

According to another implementation of the first aspect of the present disclosure, the method further includes: acquiring a selection operation of the user; when the selection operation of the user is to select the order confirmation option, sending a taxi calling order; when the selection operation of the user is to select the order modification option, receiving a departure place, a target place or a departure time inputted by the user through the order modification option; and when the selection operation of the user is to select the order cancellation option, deleting a taxi calling order.

According to another implementation of the first aspect of the present disclosure, the method further includes: acquiring conventional operation data of the user, the conventional operation data of the user being data generated based on the operations previously performed by the user to generate a taxi calling order; and directly processing a taxi calling order based on the conventional operation data.

According to a second aspect of embodiments of the present disclosure, there is provided a device for calling a taxi, including: a determining module configured to determine whether a user needs to call a taxi based on at least one of conventional behaviour data and schedule data; and an outputting module configured to, when it is determined that the user needs to call a taxi, generate and output a taxi calling order.

In the device for calling a taxi provided by the present invention, the terminal device can automatically generate and output a taxi calling order when it determines that the user needs to call a taxi. Thereby, it can initiates a taxi calling service as early as possible, avoid delay of schedule for the user. Moreover, the process does not require interference from the user. Thus, it can simplify user operation and save time for the user.

According to an implementation of the second aspect of the present disclosure, the determining module includes: an acquiring sub-module configured to acquire at least one of conventional behaviour data and schedule data of the user, the conventional behaviour data containing a place and a time where and when the user is present during a certain time period for several times in a set cycle, the schedule data containing a place and a time where and when the user plans to be present; a first determining sub-module configured to, based on at least one of the conventional behaviour data and the schedule data of the user, determine a next place where the user needs to be present according to the conventional behaviour data or the schedule data and a next time when the user arrives at the next place, and determine the next place and the next time as a target place and a target time; and a second determining sub-module configured to determine whether the user needs to call a taxi based on the target place and the target time.

According to another implementation of the second aspect of the present disclosure, the acquiring sub-module is configured to: acquire the conventional behaviour data of the user from a memory of the device or a server; and acquire the schedule data of the user from a schedule, a memorandum and an alarm clock of the device, or from the server.

According to an implementation of the second aspect of the present disclosure, the second determining sub-module is configured to: determine a departure place and a departure time; decide whether the user can arrive at the target place by public transport means or on foot within a time period from the departure time to the target time; and determine that the user needs to call a taxi if the user cannot arrive at the target place by public transport means or on foot within the time period from the departure time to the target time.

According to an implementation of the second aspect of the present disclosure, the second determining sub-module is configured to: detect variation data of a location of the user; determine a state of the user based on the variation data of a location of the user, the state of the user including not setting out and taking a public transport means; when the user is in the state of not setting out, determine a location where the user is currently in as the departure place; and when the user is in the state of taking a public transport means, determine a terminal station of a public transport means as the departure place.

According to an implementation of the second aspect of the present disclosure, the second determining sub-module is further configured to: when the user is currently in the state of taking a public transport means, determine a time when a public transport means arrives at the terminal station as the departure time; and when the user is in the state of not setting out, determine a current time as the departure time, or determining a time equals to the current time plus a time period needed by the user to get ready for setting out as the departure time.

According to an implementation of the second aspect of the present disclosure, the second determining sub-module is configured to: inquire an off-line map or an on-line map about a time period which should be took for arriving at the target place by a public transport means or on foot; and if the time period is larger than a difference between the departure time and the target time, decide that the user cannot arrive at the target place by public transport means or on foot within the time period from the departure time to the target time.

According to an implementation of the second aspect of the present disclosure, a taxi calling order contains the departure place and the target place.

According to an implementation of the second aspect of the present disclosure, a taxi calling order further contains the departure time.

According to an implementation of the second aspect of the present disclosure, the device further includes: a generating module configured to generate the conventional behaviour data of the user, the conventional behaviour data of the user containing a set place and a time when the user arrives at the set place.

According to an implementation of the second aspect of the present disclosure, the generating module includes: a first recording sub-module configured to record a place where the user is present during a certain time period for several times in a set cycle, and record the place as the set place; and a second recording sub-module configured to record a time when the user arrives at the set place.

According to an implementation of the second aspect of the present disclosure, the outputting module includes: output taxi calling options for the user to select therefrom, a taxi calling options containing an order confirmation option, an order modification option and an order cancellation option.

According to an implementation of the second aspect of the present disclosure, the device further includes: an acquiring module configured to acquire a selection operation of the user; a processing module configured to, when the selection operation of the user is to select the order confirmation option, send a taxi calling order; when the selection operation of the user is to select the order modification option, receive a departure place, a target place or a departure time inputted by the user through the order modification option; and when the selection operation of the user is to select the order cancellation option, delete a taxi calling order.

According to an implementation of the second aspect of the present disclosure, the device further includes: an acquiring module configured to acquire conventional operation data of the user, the conventional operation data of the user being data generated based on the operations previously performed by the user to generate a taxi calling order; and a processing module configured to process a taxi calling order based on the conventional operation data.

According to a third aspect of embodiments of the present disclosure, there is provided a device for calling a taxi, including: a processor; and a memory for storing instructions executable by the processor; wherein the processor is configured to perform: determining whether a user needs to call a taxi based on at least one of conventional behaviour data and schedule data; and when it is determined that the user needs to call a taxi, generating and outputting a taxi calling order.

In the device for calling a taxi provided by the present invention, the terminal device can automatically generate and output a taxi calling order when it determines that the user needs to call a taxi. Thereby, it can initiates a taxi calling service as early as possible, avoid delay of schedule for the user. Moreover, the process does not require interference from the user. Thus, it can simplify user operation and save time for the user.

In one particular embodiment, the steps of the method for calling a taxi are determined by computer program instructions.

Consequently, according to a fourth aspect, the invention is also directed to a computer program for executing the steps of a method for calling a taxi as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solution according to embodiments of the present disclosure may have the following beneficial effects.

In the present disclosure, the terminal device can automatically generate and output a taxi calling order when it determines that the user needs to call a taxi. Thereby, it can initiates a taxi calling service as early as possible, avoid delay of schedule for the user. Moreover, the process does not require interference from the user. Thus, it can simplify user operation and save time for the user.

A terminal device according to the summary of the invention given above, provides more intelligent and convenient functionality for a user, and allows the user to save time.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic diagram of an application environment according to an exemplary embodiment.
Fig. 2 is a flow chart illustrating a method for calling a taxi according to an exemplary embodiment.
Fig. 3 is a flow chart illustrating a method for calling a taxi according to an exemplary embodiment.
Fig. 4 is a block diagram of a device for calling a taxi according to an exemplary embodiment.
Fig. 5 is a block diagram of a device for calling a taxi according to an exemplary embodiment.
Fig. 6 is a block diagram of a device for calling a taxi according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects related to the invention as recited in the appended claims.

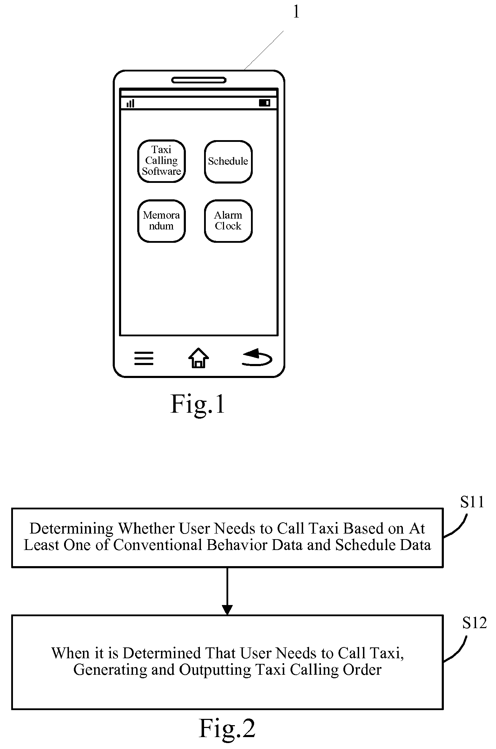

For easy description of the embodiments, an application environment of the embodiments of the present disclosure will be firstly introduced in the following. As shown in Fig. 1, the environment includes a terminal device 1 which is installed with software such as taxi calling software, a schedule, a memorandum, and an alarm clock. A user can enjoy taxi calling service through a taxi calling software, and can record his schedule on the software such as the schedule, the memorandum, and the alarm clock.

Wherein, the terminal device 1 includes but not limited to a smart phone, a smart watch or a tablet computer. A taxi calling software can be Didi, Uber and the like.

It should be noted that the above type and number of devices are merely exemplary, and are not limited in the present disclosure.

Fig. 2 is a flow chart illustrating a method for calling a taxi according to an exemplary embodiment. The method is performed by a terminal device in the above application environment. As shown in Fig. 2, the method includes the following steps.

In step S11, it is determined whether a user needs to call a taxi based on at least one of conventional behaviour data and schedule data.

That is, based on a place where the user usually be present and an arriving time or a place where the user plans to be present and an arriving time, the terminal device can determine whether the user needs to call a taxi to arrive at the above places at the above time.

In step S12, when it is determined that the user needs to call a taxi, a taxi calling order is generated and outputted.

When in step S11, it is determined that the user needs to call a taxi, a taxi calling order is pushed to the user, for the user to call a taxi.

In the present disclosure, the terminal device can automatically generate and output a taxi calling order when it determines that the user needs to call a taxi. Thereby, it can initiates a taxi calling service as early as possible, avoid delay of schedule for the user. Moreover, the process does not require interference from the user. Thus, it can simplify user operation and save time for the user.

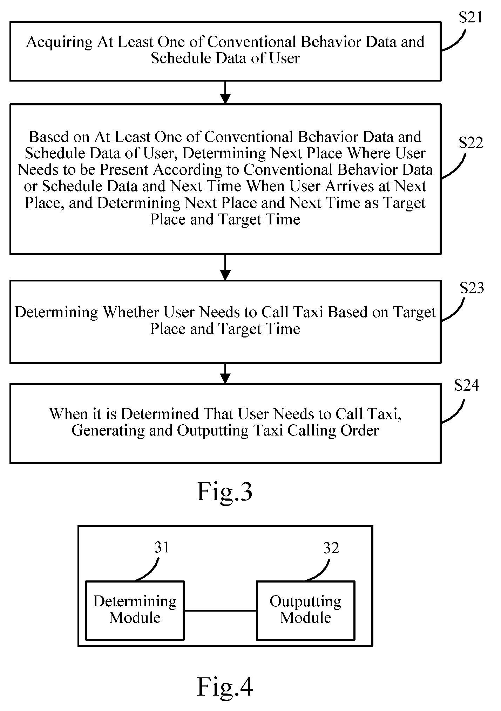

Fig. 3 is a flow chart illustrating a method for calling a taxi according to an exemplary embodiment. The method is performed by a terminal device in the above application environment. As shown in Fig. 3, the method includes the following steps.

In step S21, at least one of conventional behaviour data and schedule data of the user is acquired, the conventional behaviour data containing a place and a time where and when the user is present during a certain time period for several times in a set cycle, the schedule data containing a place and a time where and when the user plans to be present.

Where, the set cycle can be a week, a month or a year, etc. The set cycle can be set by the user, or can be a system default cycle. The time period can be set by the user, or can be a system default cycle, which can be a certain hour, or a certain half hour.

Specifically, the conventional behaviour data and schedule data can be acquired from the subject device (i.e. the above terminal device) or a server.

In an implementation of the present embodiment, acquiring at least one of conventional behaviour data and schedule data of the user includes: acquiring the conventional behaviour data of the user from a memory of the subject device or a server; and acquiring the schedule data of the user from a schedule, a memorandum and an alarm clock of the subject device, or from the server.

For example, in daily life, the user will generally record his schedule in the coming days in the above software, in order to remind himself. The specific content generally includes a place and a time, such as a meeting in the company at 11:00, October, 20.

In the implementation, the conventional behaviour data and the schedule data can be stored in the server, for the user to use these data in different terminal devices. However, the conventional behaviour data and the schedule data can also be stored in local, for the user to use these data on the terminal device. Specifically, the schedule data of the user can be stored in software such as the schedule, the memorandum and the alarm clock of the subject device. Thus, the solution can be combined with existing software, to facilitate the operation.

Further, the method also includes: generating the conventional behaviour data of the user, the conventional behaviour data of the user containing a set place and a time when the user arrives at the set place.

Where, the set place includes but not limited to spaces such as a home, a company, and a stadium.

In the above implementation, by generating the conventional behaviour data of the user, it can ensure that the terminal device can timely call a taxi for the user based on the conventional behaviour data.

In the present embodiment, generating the conventional behaviour data of the user includes: determining a place where the user is present during a certain time period for several times in a set cycle, and recording the place as the set place, coordinates of the set place can be recorded by means of a GPS sensor; and recording a time when the user arrives at the set place.

In the above method, it is described how to record a set place and a time when arriving at the set place. Specifically, the set place and the time for arriving at the set place can be recorded for multiple times, and an average value can be saved as a result.

Further, the conventional behaviour data of the user can also include a get-up time of the user and a home-leaving time of the user. A time period between the get-up time and the home-leaving time is a time period needed by the user to get ready for setting out, which is for the user to clean himself and get dressed.

It should be noted that, since generating conventional behaviour data of the user involves privacy of the user, this step should be noted to the user and be performed after the user gives his grant. In implementation, an option can be provided in a system setting menu of the mobile terminal for the user to select.

Further, the step S21 can be performed periodically, or can be performed when the terminal device is moved or is wakened. After the step S21 is performed, the terminal device will proceed to the subsequent steps.

In step S22, based on at least one of the conventional behaviour data and the schedule data of the user, a next place where the user needs to be present is determined according to the conventional behaviour data or the schedule data and a next time when the user arrives at the next place is determined, and the next place and the next time are respectively determined as a target place and a target time.

For example, the current time is 8:00, the next place where the user needs to be present according to the schedule data is the company, and the time for user to arrive at the next place where he needs to be present is 8:30. Then, the company and the time 8:30 are respectively determined as a target place and a target time.

In step S23, it is determined whether the user needs to call a taxi based on the target place and the target time.

Where, determining whether the user needs to call a taxi based on the target place and the target time includes the following step.

Step One: determining a departure place and a departure time.

Where, determining a departure place and a departure time includes: detecting variation data of a location of the user; determining a state of the user based on the variation data of a location of the user, the state of the user including not setting out and taking a public transport means; when the user is in the state of not setting out, determining a location where the user is currently in as the departure place; and when the user is in the state of taking a public transport means, determining a terminal station of a public transport means as the departure place.

Where, variation data of a location of the user refers to variation (can be specifically represented by a motion trajectory) of the location of the user during a time period. For example, if the user moves within a small range (for example, several square meters) during 1 minute, it can be considered that the user is in the state of not setting out. If the user moves a distance exceeding a set value during a set time period (for example, moves a distance exceeding 500m within 1 minute), it can be considered that the user is in the state of taking a public transport means.

In the implementation, the departure place and the departure time are determined based on variation data of the current location of the user. Thereby, it not only can determine a departure place when the user stays at a place, but also can determine a departure place when the user currently taking a train, a plane or the like.

Further, determining a departure place and a departure time further includes: when the user is currently in the state of taking a public transport means, determining a time when a public transport means arrives at the terminal station as the departure time; and when the user is in the state of not setting out, determining a current time as the departure time, or determining a time equals to the current time plus a time period needed by the user to get ready for setting out as the departure time.

For example, at 8:00, the terminal device detects that the user gets up through gravity sensing (the terminal device is in a sleeping state for a long time period and the current time is morning). In this case, the departure time = get-up time 8:00 + a time period needed by the user to get ready for setting out (30 minutes) = 8:30.

For another example, the user gets off work at 5:00 pm, the terminal device records the gets-off work time of the user, the time period needed by the user to get ready for setting out after he gets off work (for example 10 minutes). At this time, if the user has a schedule, the departure place can be determined as the company, and the departure time can be determined as 5:10.

Step Two: deciding whether the user can arrive at the target place by public transport means or on foot within a time period from the departure time to the target time.

In the above implementation, deciding whether the user can arrive at the target place by public transport means or on foot within a time period from the departure time to the target time includes: inquiring an off-line map (stored in the local device) or an on-line map (stored in a network server) about a time period which should be took for arriving at the target place by a public transport means or on foot; and if the time period is larger than a difference between the departure time and the target time, deciding that the user cannot arrive at the target place by public transport means or on foot within the time period from the departure time to the target time. Otherwise, it can be decided that the user can arrive at the target place by public transport means or on foot.

Step Three: determining that the user needs to call a taxi if the user cannot arrive at the target place by public transport means or on foot within the time period from the departure time to the target time.

In the above steps S21-S23, it is determined whether the user needs to call a taxi. A next place the user needs to be present is determined according to daily behaviour or schedule of the user. It is determined whether the user needs to call a taxi to get there based on the place the user needs to be present and the arriving time. When the user needs to call a taxi, it proceeds to step S24, to generate and output a taxi calling order. The whole process can be performed at background and require no user interference. Moreover, only when the user cannot arrive at the target place by public transport means or on foot, an order will be outputted. Thereby, it can avoid frequently outputting order to disturb the user.

However, in other implementation, the order can be generated when the next place the user needs to be and the arriving time are acquired. The detailed description thereof will be omitted herein.

In step 24, when it is determined that the user needs to call a taxi, a taxi calling order is generated and outputted.

Where, a taxi calling order contains the departure place and the target place.

Further, a taxi calling order contains the departure time. The terminal device can place an order in advance based on the departure time, for example placing the order 5 minutes before the departure time.

For example, a taxi calling order is generated soon after the user gets up, and the departure time of a taxi calling order is a time for the user to leave his home which is calculated by the terminal device. Alternatively, when the user is taking a train, the departure time can be a time when the train arrives at a station.

In the implementation, by providing a departure time, the terminal device can determine a time to place an order, to ensure that the user can arrive at the target place on time.

Further, generating and outputting a taxi calling order includes: outputting taxi calling options for the user to select therefrom, a taxi calling options containing an order confirmation option, an order modification option and an order cancellation option. These taxi calling options can assist the user to complete the order or to cancel the order.

Further, the method also includes: acquiring a selection operation of the user; when the selection operation of the user is to select the order confirmation option, sending a taxi calling order; when the selection operation of the user is to select the order modification option, receiving a departure place, a target place or a departure time inputted by the user through the order modification option; and when the selection operation of the user is to select the order cancellation option, deleting a taxi calling order.

Further, the method also includes: acquiring conventional operation data of the user, the conventional operation data of the user being data generated based on the operations previously performed by the user to generate a taxi calling order, the conventional operation data indicating conventional operation performed by the user to process an order; and processing a taxi calling order based on the conventional operation data.

Processing a taxi calling order includes confirming the order, cancelling the order or modifying the order.

For example, since the user has two chances of being late every month, in the first two mornings every month, an order from home to company will always be cancelled by the user. The above user operation is recorded in the conventional operation data of the user. When a taxi calling order is generated, if a taxi calling order is exactly a first order from home to company in a month, a taxi calling order will be directly cancelled.

The method provided by the present embodiment will be illustrated with reference to examples as follows.

Example One. At 8:00, the terminal device acquires a next place the user will be is 9:00 at the company, based on the conventional behaviour data of the user. The terminal device determines that the user cannot arrive at the company in 1 hour based on the current location of the user and the location of the company. Then, the terminal device generates and outputs a taxi calling order, with the departure place being the current location of the user and the target place is the company.

Example Two. The user will travel on business to attend a meeting at 14:00. A train he takes will arrive at a train station at 13:00 on schedule. However, at 13:00, the terminal device decides that the user has not arrives at the train station, and the user will probably be late for the meeting. Then, the terminal device provides a taxi calling service depending on the actual situation, with the departure place being the train station, and the target place being the meeting place.

An example for how a terminal device obtain and process the information a taxi calling order required comprises the following steps:
Step 1, acquiring schedule data from other software applications such as a calendar function, a memo program, a message inbox, or the like.
Step 2, determining the destination and the public transportation the user will take based on the schedule data.
Step 3, acquiring the route and the timetable of the public transportation from servers or other apps for navigation.
Step 4, monitoring the variation of the position of the user around the time that the public transportation arrives the destination normally.
Step 5, determining whether the user has arrived at the destination on time based on the variation monitored in Step 4; if yes, do not output a taxi calling order automatically, if no, go to step 6.
Step 6, monitoring the variation of the position of the user continually until the user has arrived the destination, and outputting a taxi calling order when the user arrives.

In the present disclosure, the terminal device can automatically generate and output a taxi calling order when it determines that the user needs to call a taxi. Thereby, it can initiates a taxi calling service as early as possible, avoid delay of schedule for the user. Moreover, the process does not require interference from the user. Thus, it can simplify user operation and save time for the user.

In the present disclosure, the target place where the user will be subsequently is determined based on at least one of conventional behaviourr data and schedule data of the user. It is determined whether the user needs to call a taxi to get there based on the place the user needs to be present and the arriving time. The whole process can be performed at background and require no user interference, thus saving user operation and time for the user.

In the present disclosure, the conventional behaviour data and schedule data of the user can be acquired from the local terminal, or can be acquired over network. It can be selected in various forms based on the user demand. In addition, the schedule data can be specifically acquired from the schedule, the memo and the alarm clock. Thus, the solution can be combined with existing software, to facilitate the operation.

In the present disclosure, it is decided whether the user can arrive at the target place by public transport means or on foot within a time period from the departure time to the target time. Based on this, it can decide whether the user needs to call a taxi. The deciding solution is easy to implement and compatible to the actual situation, and has a high applicability.

In the present disclosure, the departure place and the departure time are determined based on variation data of the current location of the user. Thereby, it not only can determine a departure place when the user stays at a place, but also can determine a departure place when the user currently taking a train, a plane or the like.

In the present disclosure, the departure time is determined according to different stats (taking a public transport means or not setting out) of the user. Therefore, the determination result is more accurate.

In the present disclosure, deciding whether the user can arrive at the target place by public transport means or on foot within a time period from the departure time to the target time can be implemented through an off-line map or an on-line map, which is easy for implementation.

In the present disclosure, a taxi calling order can include a departure place, a target place or the like. Therefore, it can eliminate the need for user input.

In the present disclosure, a taxi calling order can also include a departure time. By providing a departure time, the terminal device can determine a time to place an order, to ensure that the user can arrive at the target place on time.

In the present disclosure, the conventional behaviour data of the user is generated, to ensure that the terminal device can timely call a taxi for the user according to the conventional behaviour data of the user.

In the present disclosure, when a taxi calling order is outputted, taxi calling options are outputted for the user to select therefrom. A taxi calling options contains an order confirmation option, an order modification option and an order cancellation option. Then, the user can confirm, modify and cancel the order based on the contents of the order. Thereby, it can ensure the accuracy of the order.

In the present disclosure, a taxi calling order can be directly processed based on conventional operation data of the user. It can save the confirming or modifying operation for the user and save time for the user.

Fig. 4 is a block diagram of a device for calling a taxi according to an exemplary embodiment. The device for calling a taxi can be the above terminal device or be integrated in the terminal device. As shown in Fig. 4, the device includes: a determining module 31 configured to determine whether a user needs to call a taxi based on at least one of conventional behaviour data and schedule data; and an outputting module 32 configured to, when it is determined that the user needs to call a taxi, generate and output a taxi calling order.

In the present disclosure, the device can automatically generate and output a taxi calling order when it determines that the user needs to call a taxi. Thereby, it can initiates a taxi calling service as early as possible, avoid delay of schedule for the user. Moreover, the process does not require interference from the user. Thus, it can simplify user operation and save time for the user.

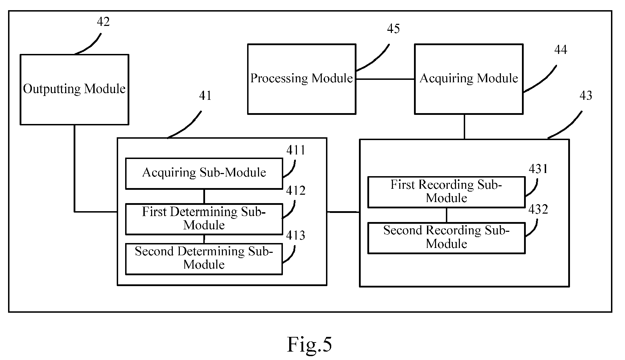

Fig. 5 is a block diagram of a device for calling a taxi according to an exemplary embodiment. The device for calling a taxi can be the above terminal device or be integrated in the terminal device. As shown in Fig. 5, the device includes: a determining module 41 configured to determine whether a user needs to call a taxi based on at least one of conventional behaviour data and schedule data; and an outputting module 42 configured to, when it is determined that the user needs to call a taxi, generate and output a taxi calling order.

Where, the determining module 41 includes: an acquiring sub-module 411 configured to acquire at least one of conventional behaviour data and schedule data of the user, the conventional behaviour data containing a place and a time where and when the user is present during a certain time period for several times in a set cycle, the schedule data containing a place and a time where and when the user plans to be present; a first determining sub-module 412 configured to, based on at least one of the conventional behaviour data and the schedule data of the user, determine a next place where the user needs to be present according to the conventional behaviour data or the schedule data and a next time when the user arrives at the next place, and determine the next place and the next time as a target place and a target time; and a second determining sub-module 413 configured to determine whether the user needs to call a taxi based on the target place and the target time.

Where, the set cycle can be a week, a month or a year, etc. The set cycle can be set by the user, or can be a system default cycle. The time period can be set by the user, or can be a system default cycle, which can be a certain hour, or a certain half hour.

Specifically, the conventional behaviour data and schedule data can be acquired from the subject device (i.e. the above device) or a server.

In an implementation of the present embodiment, the acquiring sub-module 411 is configured to: acquire the conventional behaviour data of the user from a memory of the device or a server; and acquire the schedule data of the user from a schedule, a memorandum and an alarm clock of the device, or from the server.

For example, in daily life, the user will generally record his schedule in the coming days in the above software, in order to remind himself. The specific content generally includes a place and a time, such as a meeting in the company at 11:00, October, 20.

In the implementation, the conventional behaviour data and the schedule data can be stored in the server, for the user to use these data in different devices. However, the conventional behaviour data and the schedule data can also be stored in local, for the user to use these data on the device. Specifically, the schedule data of the user can be stored in software such as a schedule, a memorandum and an alarm clock of the subject device. Thus, the solution can be combined with existing software, to facilitate the operation.

Further, the acquiring sub-module 411 can perform the above operations periodically, or can be performed when the device is moved or is wakened.

In the present embodiment, the second determining sub-module 413 is configured to: determine a departure place and a departure time; decide whether the user can arrive at the target place by public transport means or on foot within a time period from the departure time to the target time; and determine that the user needs to call a taxi if the user cannot arrive at the target place by public transport means or on foot within the time period from the departure time to the target time.

To determine the departure place, the second determining sub-module 413 is configured to: detect variation data of a location of the user; determine a state of the user based on the variation data of a location of the user, the state of the user including not setting out and taking a public transport means; when the user is in the state of not setting out, determine a location where the user is currently in as the departure place; and when the user is in the state of taking a public transport means, determine a terminal station of a public transport means as the departure place.

Where, variation data of a location of the user refers to variation (can be specifically represented by a motion trajectory) of the location of the user during a time period. For example, if the user moves within a small range (for example, several square meters) during 1 minute, it can be considered that the user is in the state of not setting out. If the user moves a distance exceeding a set value during a set time period (for example, moves a distance exceeding 500m within 1 minute), it can be considered that the user is in the state of taking a public transport means.

In the implementation, the departure place and the departure time are determined based on variation data of the current location of the user. Thereby, it not only can determine a departure place when the user stays at a place, but also can determine a departure place when the user currently taking a train, a plane or the like.

Further, to determine the departure time, the second determining sub-module 413 is further configured to: when the user is currently in the state of taking a public transport means, determine a time when a public transport means arrives at the terminal station as the departure time; and when the user is in the state of not setting out, determine a current time as the departure time, or determining a time equals to the current time plus a time period needed by the user to get ready for setting out as the departure time.

For example, at 8:00, the device detects that the user gets up through gravity sensing (the device is in a sleeping state for a long time period and the current time is morning). In this case, the departure time = get-up time 8:00 + a time period needed by the user to get ready for setting out (30 minutes) = 8:30.

For another example, the user gets off work at 5:00 pm, the terminal device records the gets-off work time of the user, the time period needed by the user to get ready for setting out after he gets off work (for example 10 minutes). At this time, if the user has a schedule, the departure place can be determined as the company, and the departure time can be determined as 5:10.

To decide whether the user can arrive at the target place by public transport means or on foot within a time period from the departure time to the target time, the second determining sub-module 413 is configured to: inquire an off-line map (stored in the local device) or an on-line map (stored in a network server) about a time period which should be took for arriving at the target place by a public transport means or on foot; and if the time period is larger than a difference between the departure time and the target time, decide that the user cannot arrive at the target place by public transport means or on foot within the time period from the departure time to the target time. Otherwise, the second determining sub-module 413 decides that the user can arrive at the target place by public transport means or on foot.

In the present embodiment, a taxi calling order contains the departure place and the target place.

In the present embodiment, a taxi calling order further contains the departure time. The device can place an order in advance based on the departure time, for example placing an order 5 minutes before departure time.

For example, a taxi calling order is generated soon after the user gets up, and the departure time of a taxi calling order is a time for the user to leave his home which is calculated by the device. Alternatively, when the user is taking a train, the departure time can be a time when the train arrives at a station.

In the implementation, by providing a departure time, the device can determine a time to place an order, to ensure that the user can arrive at the target place on time.

Further, the device further includes: a generating module 43 configured to generate the conventional behaviour data of the user, the conventional behaviour data of the user containing a set place and a time when the user arrives at the set place.

Where, the set place includes but not limited to spaces such as a home, a company, a stadium, and the like.

Further, the generating module 43 includes: a first recording sub-module 431 configured to record a place where the user is present during a certain time period for several times in a set cycle, and record the place as the set place, coordinates of the set place can be recorded by means of a GPS sensor; and a second recording sub-module 432 configured to record a time when the user arrives at the set place.

In the above description, it is described how the generating module 43 records a set place and a time when arriving at the set place. Specifically, the generating module 43 can record the set place and the time for arriving at the set place for multiple times, and can save an average value as a result.

Further, the conventional behaviour data of the user can also include a get-up time of the user and a home-leaving time of the user. A time period between the get-up time and the home-leaving time is a time period needed by the user to get ready for setting out, which is for the user to clean himself and get dressed.

In the above implementation, by generating the conventional behaviour data of the user, it can ensure that the device can timely call a taxi for the user based on the conventional behaviour data.

It should be noted that, since generating conventional behaviour data of the user involves privacy of the user, this step should be noted to the user and be performed after the user gives his grant. In implementation, an option can be provided in a system setting menu of the mobile terminal for the user to select.

In the present embodiment, the outputting module 42 includes: output taxi calling options for the user to select therefrom, a taxi calling options containing an order confirmation option, an order modification option and an order cancellation option.

In addition, the device further includes: an acquiring module 44 configured to acquire a selection operation of the user; a processing module 45 configured to, when the selection operation of the user is to select the order confirmation option, send a taxi calling order; when the selection operation of the user is to select the order modification option, receive a departure place, a target place or a departure time inputted by the user through the order modification option; and when the selection operation of the user is to select the order cancellation option, delete a taxi calling order.

In addition, the acquiring module 44 is configured to acquire conventional operation data of the user, the conventional operation data of the user being data generated based on the operations previously performed by the user to generate a taxi calling order, the conventional operation data indicating conventional operation performed by the user to process an order; and the processing module 45 is configured to process a taxi calling order based on the conventional operation data.

For example, since the user has two chances of being late every month, in the first two mornings every month, an order from home to company will always be cancelled by the user. The above user operation is recorded in the conventional operation data of the user. When a taxi calling order is generated, if a taxi calling order is exactly a first order from home to company in a month, a taxi calling order will be directly cancelled.

In the present disclosure, the device can automatically generate and output a taxi calling order when it determines that the user needs to call a taxi. Thereby, it can initiate a taxi calling service as early as possible, avoid delay of schedule for the user. Moreover, the process does not require interference from the user. Thus, it can simplify user operation and save time for the user.

With respect to the devices in the above embodiments, the specific manners for performing operations for individual modules therein have been described in detail in the embodiments regarding the relevant methods, which will not be elaborated herein.

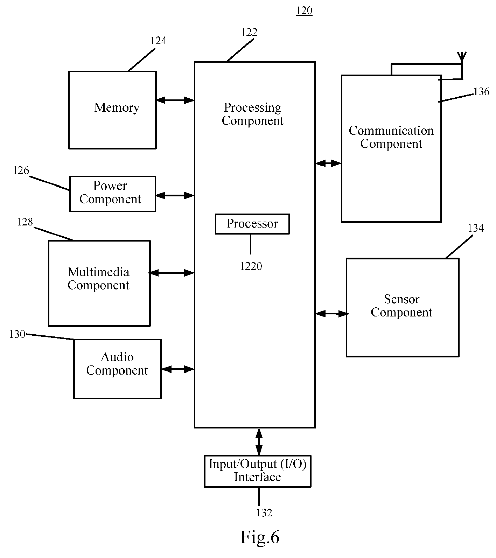

Fig. 6 is a block diagram of a device 120 for calling a taxi according to an exemplary embodiment. For example, the device 120 can be mobile terminal (such as a smart phone).

The device 120 can include one or more of the following components: a processing component 122, a memory 124, a power component 126, a multimedia component 128, an audio component 130, an input/output (I/O) interface 132, a sensor component 134, and a communication component 136.

The processing component 122 typically controls overall operations of the device 120, such as the operations associated with display, telephone calls, data communications, camera operations, and recording operations. The processing component 122 can include one or more processors 1220 to execute instructions to perform all or part of the steps in the above described methods. Moreover, the processing component 122 can include one or more modules which facilitate the interaction between the processing component 122 and other components. For instance, the processing component 122 can include a multimedia module to facilitate the interaction between the multimedia component 128 and the processing component 122.

The memory 124 is configured to store various types of data to support the operation of the device 120. Examples of such data include instructions for any applications or methods operated on the device 120, contact data, phonebook data, messages, pictures, video, etc. The memory 124 can be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 126 provides power to various components of the device 120. The power component 126 can include a power management system, one or more power sources, and any other components associated with the generation, management, and distribution of power in the device 120.

The multimedia component 128 includes a screen providing an output interface between the device 120 and the user. In some embodiments, the screen can include a liquid crystal display (LCD) and a touch panel (TP). If the screen includes the touch panel, the screen can be implemented as a touch screen to receive input signals from the user. The touch panel includes one or more touch sensors to sense touches, swipes, and gestures on the touch panel. The touch sensors can not only sense a boundary of a touch or swipe action, but also sense a period of time and a pressure associated with the touch or swipe action. In some embodiments, the multimedia component 128 includes a front camera and/or a rear camera. The front camera and the rear camera can receive an external multimedia datum while the device 120 is in an operation mode, such as a photographing mode or a video mode. Each of the front camera and the rear camera can be a fixed optical lens system or have focus and optical zoom capability.

The audio component 130 is configured to output and/or input audio signals. For example, the audio component 130 includes a microphone ("MIC") configured to receive an external audio signal when the device 120 is in an operation mode, such as a call mode, a recording mode, and a voice recognition mode. The received audio signal can be further stored in the memory 124 or transmitted via the communication component 136. In some embodiments, the audio component 130 further includes a speaker to output audio signals.

The I/O interface 132 provides an interface between the processing component 122 and peripheral interface modules, such as a keyboard, a click wheel, buttons, and the like. The buttons can include, but are not limited to, a home button, a volume button, a starting button, and a locking button.

The sensor component 134 includes one or more sensors to provide status assessments of various aspects of the device 120. For instance, the sensor component 134 can detect an open/closed status of the device 120, relative positioning of components, e.g., the display and the keypad, of the device 120, a change in position of the device 120 or a component of the device 120, a presence or absence of user contact with the device 120, an orientation or an acceleration/deceleration of the device 120, and a change in temperature of the device 120. The sensor component 134 can include a proximity sensor configured to detect the presence of nearby objects without any physical contact. The sensor component 134 can also include a light sensor, such as a CMOS or CCD image sensor, for use in imaging applications. In some embodiments, the sensor component 134 can also include an accelerometer sensor, a gyroscope sensor, a magnetic sensor, a pressure sensor, or a temperature sensor.

The communication component 136 is configured to facilitate communication, wired or wirelessly, between the device 120 and other devices. The device 120 can access a wireless network based on a communication standard, such as WiFi, 2G, or 3G, or a combination thereof. In one exemplary embodiment, the communication component 136 receives a broadcast signal or broadcast associated information from an external broadcast management system via a broadcast channel. In one exemplary embodiment, the communication component 136 further includes a near field communication (NFC) module to facilitate short-range communications. For example, the NFC module can be implemented based on a radio frequency identification (RFID) technology, an infrared data association (IrDA) technology, an ultra-wideband (UWB) technology, a Bluetooth (BT) technology, and other technologies.

In exemplary embodiments, the device 120 can be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 124, executable by the processor 1220 in the device 120, for performing the above-described methods. For example, the non-transitory computer-readable storage medium can be a ROM, a RAM, a CD-ROM, a magnetic tape, a floppy disc, an optical data storage device, and the like.

A non-transitory computer readable storage medium, when instructions in the storage medium is executed by the processor of a device, the device is caused to perform a method for calling a taxi. The method includes: determining whether a user needs to call a taxi based on at least one of conventional behaviour data and schedule data; and when it is determined that the user needs to call a taxi, generating and outputting a taxi calling order.

According to an implementation of the present disclosure, determining whether the user needs to call a taxi based on at least one of conventional behaviour data and schedule data, includes: acquiring at least one of conventional behaviour data and schedule data of the user, the conventional behaviour data containing a place and a time where and when the user is present during a certain time period for several times in a set cycle, the schedule data containing a place and a time where and when the user plans to be present; based on at least one of the conventional behaviour data and the schedule data of the user, determining a next place where the user needs to be present according to the conventional behaviour data or the schedule data and a next time when the user arrives at the next place, and determining the next place and the next time as a target place and a target time; and determining whether the user needs to call a taxi based on the target place and the target time.

In the implementation, a next place the user needs to be present is determined according to daily behaviour or schedule of the user. It is determined whether the user needs to call a taxi to get there based on the place the user needs to be present and the arriving time. The whole process can be performed at background and require no user interference.

According to another implementation of the present disclosure, acquiring at least one of conventional behaviour data and schedule data of the user includes: acquiring the conventional behaviour data of the user from a memory of the device or a server; and acquiring the schedule data of the user from a schedule, a memorandum and an alarm clock of the device, or from the server.

In the implementation, the conventional behaviour data and schedule data of the user can be acquired from the local terminal, or can be acquired over network. In addition, the schedule data can be specifically acquired from schedule, memo and alarm clock. Thus, the solution can be combined with existing software, to facilitate the operation.

According to another implementation of the present disclosure, determining whether the user needs to call a taxi based on the target place and the target time includes: determining a departure place and a departure time; deciding whether the user can arrive at the target place by public transport means or on foot within a time period from the departure time to the target time; and determining that the user needs to call a taxi if the user cannot arrive at the target place by public transport means or on foot within the time period from the departure time to the target time.

According to another implementation of the present disclosure, determining a departure place and a departure time includes: detecting variation data of a location of the user; determining a state of the user based on the variation data of a location of the user, the state of the user including not setting out and taking a public transport means; when the user is in the state of not setting out, determining a location where the user is currently in as the departure place; and when the user is in the state of taking a public transport means, determining a terminal station of a public transport means as the departure place.

In the implementation, the departure place and the departure time are determined based on variation data of the current location of the user. Thereby, it not only can determine a departure place when the user stays at a place, but also can determine a departure place when the user currently taking a train, a plane or the like.

According to another implementation of the present disclosure, determining a departure place and a departure time further includes: when the user is currently in the state of taking a public transport means, determining a time when a public transport means arrives at the terminal station as the departure time; and when the user is in the state of not setting out, determining a current time as the departure time, or determining a time equals to the current time plus a time period needed by the user to get ready for setting out as the departure time.

In the implementation, the departure time is determined according to different stats (taking a public transport means or not setting out) of the user. Therefore, the determination result is more accurate.

According to another implementation of the present disclosure, deciding whether the user can arrive at the target place by public transport means or on foot within a time period from the departure time to the target time, includes: inquiring an off-line map or an on-line map about a time period which should be took for arriving at the target place by a public transport means or on foot; and if the time period is larger than a difference between the departure time and the target time, deciding that the user cannot arrive at the target place by public transport means or on foot within the time period from the departure time to the target time.

According to another implementation of the present disclosure, a taxi calling order contains the departure place and the target place.

According to another implementation of the present disclosure, a taxi calling order further contains the departure time.

In the implementation, by providing a departure time, the terminal device can determine a time to place an order, to ensure that the user can arrive at the target place on time.

According to another implementation of the present disclosure, the method further includes:
generating the conventional behaviour data of the user, the conventional behaviour data of the user containing a set place and a time when the user arrives at the set place.

According to another implementation of the present disclosure, generating the conventional behaviour data of the user includes: recording a place where the user is present during a certain time period for several times in a set cycle, and recording the place as the set place; and recording a time when the user arrives at the set place.

In the above implementation, the conventional behaviour data of the user is generated, to ensure that the terminal device can timely call a taxi for the user according to the conventional behaviour data of the user.

According to another implementation of the present disclosure, generating and outputting a taxi calling order includes: outputting taxi calling options for the user to select therefrom, a taxi calling options containing an order confirmation option, an order modification option and an order cancellation option.

According to another implementation of the present disclosure, the method further includes: acquiring a selection operation of the user; when the selection operation of the user is to select the order confirmation option, sending a taxi calling order; when the selection operation of the user is to select the order modification option, receiving a departure place, a target place or a departure time inputted by the user through the order modification option; and when the selection operation of the user is to select the order cancellation option, deleting a taxi calling order.

According to another implementation of the present disclosure, the method further includes: acquiring conventional operation data of the user, the conventional operation data of the user being data generated based on the operations previously performed by the user to generate a taxi calling order, the conventional operation data indicating conventional operation performed by the user to process an order; and directly processing a taxi calling order based on the conventional operation data.

## Claims

1. A method for calling a taxi, which is applied in a terminal, **characterized in that** the method comprises:
determining (S11) whether a user needs to call a taxi based on at least one of conventional behavior data and schedule data; and
when it is determined that the user needs to call a taxi, generating (S12, S24) and outputting a taxi calling order.

2. The method of claim 1, wherein determining (S11) whether the user needs to call a taxi based on at least one of conventional behavior data and schedule data, comprises:
acquiring (S21) at least one of conventional behavior data and schedule data of the user, the conventional behavior data containing a place and a time where and when the user is present during a certain time period for several times in a set cycle, the schedule data containing a place and a time where and when the user plans to be present;
based on at least one of the conventional behavior data and the schedule data of the user, determining (S22) a next place where the user needs to be present according to the conventional behavior data or the schedule data and a next time when the user arrives at the next place, and determining the next place and the next time as a target place and a target time; and
determining (S23) whether the user needs to call a taxi based on the target place and the target time.

3. The method of claim 2, wherein acquiring at least one of conventional behavior data and schedule data of the user comprises:
acquiring the conventional behavior data of the user from a memory of the subject device or a server; and
acquiring the schedule data of the user from a schedule, a memorandum and an alarm clock of the subject device, or from the server.

4. The method of claim 2, wherein determining whether the user needs to call a taxi based on the target place and the target time comprises:
determining a departure place and a departure time;
deciding whether the user can arrive at the target place by a public transport means or on foot within a time period from the departure time to the target time; and
determining that the user needs to call a taxi if the user cannot arrive at the target place by a public transport means or on foot within the time period from the departure time to the target time.

5. The method of claim 4, wherein determining a departure place and a departure time comprises:
detecting variation data of a location of the user;
determining a state of the user based on the variation data of the location of the user, the state of the user including not setting out and taking a public transport means;
when the user is in the state of not setting out, determining a location where the user is currently in as the departure place; and
when the user is in the state of taking a public transport means, determining a terminal station of a public transport means as the departure place.

6. The method of claim 5, wherein determining a departure place and a departure time further comprises:
when the user is currently in the state of taking a public transport means, determining a time when a public transport means arrives at the terminal station as the departure time; and
when the user is in the state of not setting out, determining a current time as the departure time, or determining a time equals to the current time plus a time period needed by the user to get ready for setting out as the departure time.

7. The method of claim 4, wherein deciding whether the user can arrive at the target place by a public transport means or on foot within a time period from the departure time to the target time, comprises:
inquiring an off-line map or an on-line map about a time period which should be took for arriving at the target place by a public transport means or on foot; and
if the time period is larger than a difference between the departure time and the target time, deciding that the user cannot arrive at the target place by a public transport means or on foot within the time period from the departure time to the target time.

8. The method of any one of claims 1-7, wherein generating and outputting a taxi calling order comprises:
outputting taxi calling options for the user to select therefrom, a taxi calling options containing an order confirmation option, an order modification option and an order cancellation option.

9. The method of claim 8, wherein the method further comprises:
acquiring a selection operation of the user;
when the selection operation of the user is to select the order confirmation option, sending a taxi calling order;
when the selection operation of the user is to select the order modification option, receiving a departure place, a target place or a departure time inputted by the user through the order modification option; and
when the selection operation of the user is to select the order cancellation option, deleting a taxi calling order.

10. The method of any one of claims 1-7, wherein the method further comprises:
acquiring conventional operation data of the user, the conventional operation data of the user being data generated based on the operations previously performed by the user to generate a taxi calling order; and
processing a taxi calling order based on the conventional operation data.

11. A terminal device for calling a taxi, **characterized in that** the device comprises:
a determining module configured to determine whether a user needs to call a taxi based on at least one of conventional behavior data and schedule data; and
an outputting module configured to, when it is determined that the user needs to call a taxi, generate and output a taxi calling order.

12. The device of claim 11, wherein the determining module comprises:
an acquiring sub-module configured to acquire at least one of conventional behavior data and schedule data of the user, the conventional behavior data containing a place and a time where and when the user is present during a certain time period for several times in a set cycle, the schedule data containing a place and a time where and when the user plans to be present;
a first determining sub-module configured to, based on at least one of the conventional behavior data and the schedule data of the user, determine a next place where the user needs to be present according to the conventional behavior data or the schedule data and a next time when the user arrives at the next place, and determine the next place and the next time as a target place and a target time; and
a second determining sub-module configured to determine whether the user needs to call a taxi based on the target place and the target time.

13. A device for calling a taxi, comprising:
a processor; and
a memory for storing instructions executable by the processor;
wherein the processor is configured to perform:
determining whether a user needs to call a taxi based on at least one of conventional behavior data and schedule data; and
when it is determined that the user needs to call a taxi, generating and outputting a taxi calling order.

14. A computer program including instructions for executing the steps of a method for calling a taxi according to any one of claims 1 to 10 when said program is executed by a computer.

15. A recording medium readable by a computer and having recorded thereon a computer program including instructions for executing the steps of a method for calling a taxi according to any one of claims 1 to 10.
